# EUROPEAN PATENT APPLICATION

(11) **EP 1 479 477 A1**
(43) Date of publication of application: **24.11.2004**
(21) Application number: 03425320.3
(22) Date of filing: 19.05.2003
(51) Int. Cl.: B23Q 11/08, B23Q 7/04, B23Q 7/16, B27M 1/08

(54) **Machine tool for machining workpieces**

(71) Applicant: BACCI PAOLINO DI BACCI AGOSTINO, 56021 Cascina, Pisa (IT)
(72) Inventor: Ruggieri, Alberto, 56025 Pontedera, Pisa (IT)
(74) Representative: Mannucci, Michele

(57) **Abstract**

The machine tool comprises: a base (3) on which a table (7) moves to support workpieces (P1) to be machined, said table moving from a loading and unloading position (15) of the workpieces (P1) to a machining zone, provided with at least one operating head (13) with at least one tool (U); a door (33) moving to open and close an entrance to the loading and unloading zone (15); loading and unloading devices for the workpieces; and a magazine for the workpieces to be machined (P1). The magazine (39) is associated with said door (33), and the loading and unloading devices have at least one moving gripper (27) disposed on the opposite side of the door in respect of the base, controlled to pick up the workpieces from said magazine and position then on said table (7).

## Description

### Technical field

The present invention relates to a machine tool, in particular although not exclusively, to machine workpieces in wood or another material to construct furniture, chairs and other furnishing items.

### State of the art

In the machining of elements to construct furnishing items, such as chairs or the like, linear or moving table milling machines are frequently used. An example of a milling machine of this type is described in the Italian patent no. 1238927. This prior art patent describes a linear copy milling machine, in which one or more workpieces disposed over a copying template that controls the movements of the tools, are machined by a series of operating heads equipped with tools.

Moving table milling machines typically comprise a table or bench that translates along a fixed base from a loading and unloading position to a machining position or zone and vice versa. The table is provided with workpiece clamping members and one or more operating heads with respective work tools are provided in the machining zone.

The machine is normally enclosed in a protective cabin that has an opening door to allow the operator to load and unload workpieces manually and equip the machine for the specific machinings. In some cases protection is complete, in the sense that the entire machine is enclosed in a cabin, into which the door is integrated. As well as the door, the cabin may have a door to access the inside of the cabin. The operator unloads the machined workpieces from the moving table, loads the workpieces on the table and, after closing the door, starts the production cycle.

To satisfy current needs for automation and increased production speeds, machines have been produced with mechanized loading and unloading systems for workpieces to be machined and machined workpieces. According to a possible prior art solution, the protective cabin is provided with two doors disposed on the two opposite sides of the loading and unloading position of the moving table. On one side of the machine, a loading and unloading system is positioned outside the cabin, which moves in a single direction to eject the machined workpieces from the moving table and load it with new workpieces to be machined, picked up from a magazine disposed along the trajectory of movement of the loading and unloading system. The machined workpieces are ejected through the opening positioned opposite the feed opening of the loading and unloading system and picked up by the operator.

This device has some drawbacks recognizable in the fact that the operator must move around the machine to fill the magazine with workpieces to be machined and to pick up the machined workpieces ejected from the machine. Moreover, the loading and unloading system moves outside the protective cabin, representing a hazard.

In a different known device, the loading and unloading movements are symmetrical in respect of the machine table. This solution means the operator does not require to move around the machine, but is extremely cumbersome.

In another solution, an oscillating system is provided equipped with grippers to grip the workpieces to be machined, which picks up the workpieces from a zone outside the cabin and, with oscillating movement, carries them inside the cabin over the moving table. A second unloading system inside the cabin pushes the machined workpieces off the table, to make them fall onto a delivery chute, disposed on the same side as the loading system is positioned. The advantage of this solution is that the operator does not require to move around the machine, although it is not particularly safe, as the oscillating loading members are positioned outside the protective cabin. Moreover, these members are cumbersome when the operator wishes to access the machine to adjust it or to load or unload workpieces manually.

### Objects and summary of the invention

The object of the present invention is to produce a machine tool of the type mentioned hereinbefore, with means to load and unload the workpieces, which has reduced overall dimensions, is very safe for the operator and which eliminates the need for the operator to move around the machine for service operations, such as loading the workpieces to be machined into the magazine and picking up the machined workpieces ejected from the machine.

Substantially, according to the invention, in a machine tool of the type comprising:
- a base on which a table moves to support workpieces to be machined, said table moving from a workpiece loading and unloading position to a machining zone, provided with at least one operating head with at least one tool
- an opening door for opening and closing an entrance to the loading and unloading zone
- workpiece loading and unloading devices
- and a magazine for the workpieces to be machined
the magazine is associated with the door, and the loading and unloading devices comprise at least one moving gripper, controlled to pick up one or more workpieces from the magazine and load them onto the table when this is in the loading and unloading position. The gripper(s) are disposed in respect of the base, on the opposite side of the door and can move towards the door to pick up workpieces from the magazine associated with it.

Advantageously, according to a preferred embodiment of the invention, the door is integrated in a cabin that encloses the entire machine or work center, although this is not strictly indispensable, and inside which the grippers are disposed.

The magazine is preferably disposed in the space occupied by the door and may be mounted on the door in a removable way, so that it can be installed when required and removed when loading and unloading are to be performed manually. Otherwise, it can be secured to the door in such a way that it can be moved out of the space occupied and allow access by the operator.

According to a preferred embodiment of the invention, nonetheless, the magazine is mounted on the door in such a way that it moves with it, so that it is moved to grant the operator access simply by opening the door.

The gripper(s) may as a rule be provided with an oscillatory movement, around an axle disposed in the cabin enclosing the machine tool. Nonetheless, according to a preferred embodiment of the invention, the gripper is carried by a slide positioned on the opposite side of the base in respect of the door, which translates along guides preferably orthogonal to the direction of movement of the workpiece-holding table.

The layout according to the invention makes it possible to obtain a compact machine, with a high degree of safety and in which the movements required by the operator are minimum. Moreover, workpieces may be loaded manually, alternatively to automatic loading through the loading and unloading devices. This is particularly advantageous when a limited number of workpieces are to be machined.

As well as the gripper to grip the workpieces to be machined from the magazine, the loading and unloading devices may comprise a pick-up member for machined workpieces, positioned between the base and the door. This pick-up member can pick up machined workpieces from the surface of the moving table and transfer them to a release or unloading zone of the machine. In a preferred embodiment the pick-up member receives the workpieces, which are unloaded from the moving table by the same gripper(s) that load the workpieces to be machined, when these perform a movement towards the magazine to pick up the subsequent group of workpieces to be machined.

The pick-up member may be constituted, for example, by a chute, onto which the machined workpieces are simply pushed by the gripper. Alternatively, the pick-up member may be an active member, that is a device that transfers the workpiece with a controlled movement. For example, it may be a conveyor onto which the workpieces are dropped by the gripper and which extracts the machined workpieces for example with a movement parallel to the base on which the moving table is positioned.

In a particularly advantageous embodiment of the invention, the pick-up member moves vertically from a position to receive the machined workpieces from said moving table to a position to remove the machined workpieces, in which the workpieces may be unloaded by a suitable mechanism or simply removed manually by the operator.

The door may be provided with an oscillatory movement to open and close it or preferably with a translatory movement, that is sliding parallel to itself. In this case preferably it moves in a vertical direction, to reduce the overall dimensions of the work center.

The magazine of the workpieces to be machined may be positioned in an open compartment of the door, at a height accessible to the gripper of the devices for loading the workpieces to be machined. The open compartment may be equipped, on the inside of the protective cabin of the machine, with a safety closing member, for example comprising a flexible panel. This may be equipped with a vertical opening and closing movement. This facilitates access to the compartment by the gripper(s) to pick up the workpieces to be machined from the magazine. On the contrary, during machining the member is closed and prevents accidental discharge of swarf or chips produced by the tools.

To increase safety the compartment of the door inside which the magazine for workpieces to be machined is fitted may also be equipped with optical safety means, for example an optical sight, disposed towards the external side of the cabin, that is towards the operator. This optical sight detects the presence of the operator's hands inside the compartment housing the magazine. In this case the control unit of the machine may disable start-up of the machining cycle. This optical sight may also be used if the closing member is not fitted.

Under the compartment containing the magazine, the door may advantageously have a passage for delivery of the machined workpieces. The pick-up member may be designed and controlled so that the machined workpieces are taken to the height of this passage from where the operator, or a mechanical handling system, can remove the workpieces machined by the machine.

To mount the grippers to engage and pick up the workpieces to be machined, according to an advantageous embodiment of the invention, the slide carries a crosspiece which extends more or less orthogonal to the movement of the slide and to which a plurality of grippers are fixed in adjustable position, for the objects.

Further advantageous characteristics and embodiments of the invention are indicated in the accompanying dependent claims and shall be illustrated with reference to a non-limiting example of an embodiment of the invention.

### Brief description of the drawings

The invention shall now be better understood by following the description and accompanying drawing, which shows a non-limiting practical embodiment of the invention. More specifically, in the drawing, in which identical or corresponding parts are indicated with the same reference number:
Fig.1 shows a plan view of the machine according to the invention;
Fig.2 shows a view according to II-II in Fig.1;
Fig.3 shows a front view of the door, according to III-III in Fig.1;

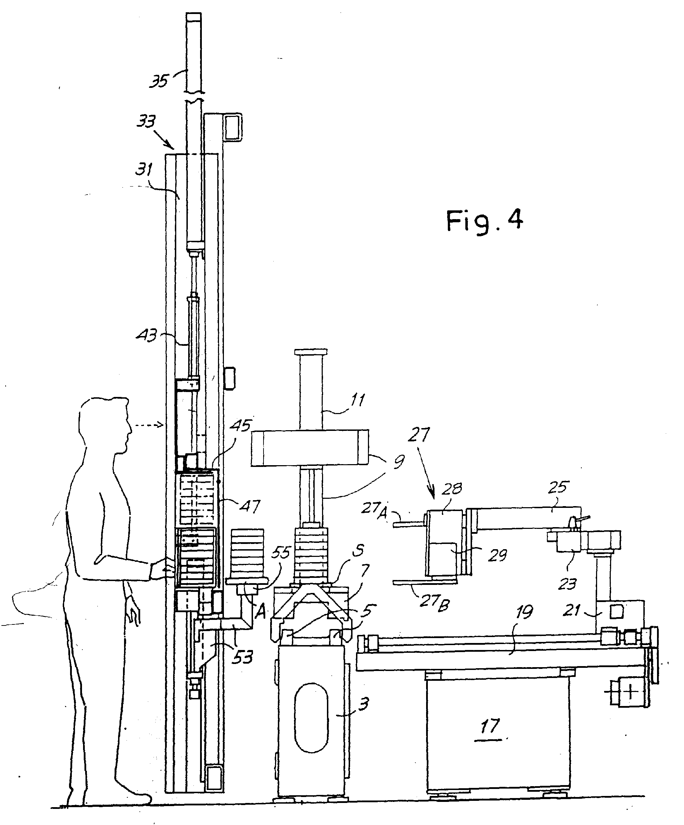

Fig.4 shows a section according to IV-IV in Fig.3 with the door closed and the protection inside the compartment of the door also closed;

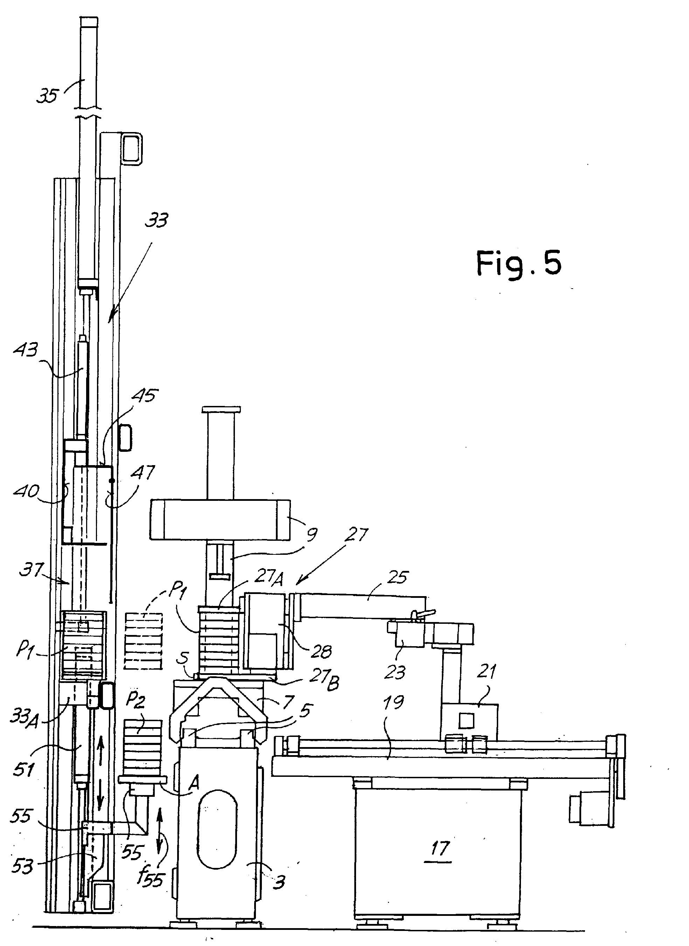

Fig.5 shows an analogous section to the one in Fig.4 with the protection inside the compartment of the door open;

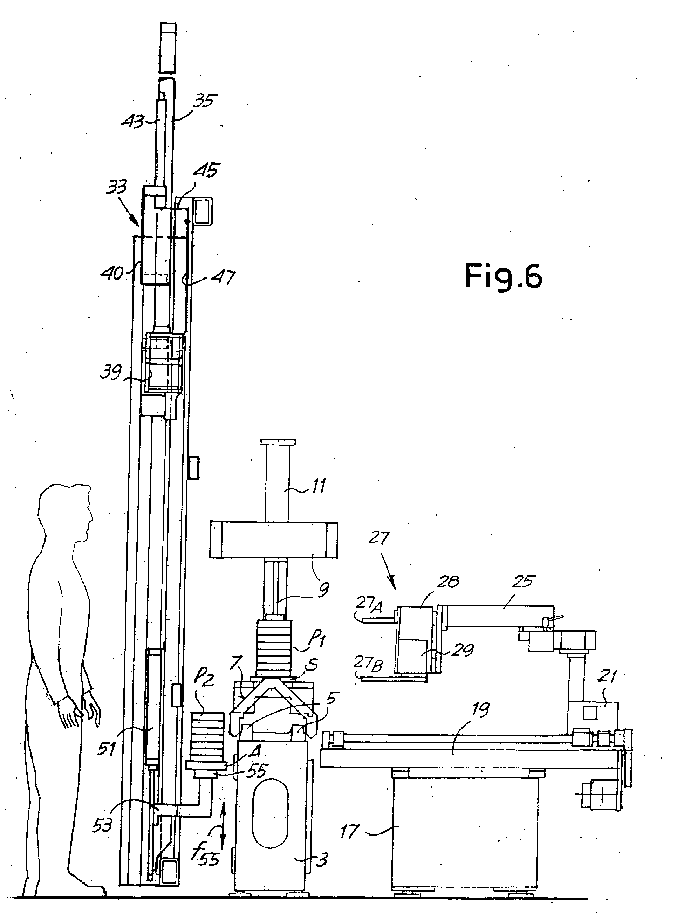

Fig.6 schematically shows a section analogous to the sections in Figs.4 and 5 with the door open;
Figs.7A - 7E show a sequence to load the workpieces to be machined and to unload the machined workpieces.

### Detailed description of the preferred embodiment of the invention

The machine tool or work center, indicated as a whole with 1, has a base 3 extending longitudinally and equipped with guides 5 for a carriage or moving table 7 that translates along the guides 5 according to the double arrow f7. The moving table 7 is equipped with clamping members for the workpieces to be machined, in the example illustrated constituted by a portal structure 9 that supports a series of piston-cylinder actuators 11.

Associated with the base 3 are operating units 13 which may, in a per se known way, if necessary slide along horizontal guides carried by the base 3. The operating units 13 are provided with machining tools, one of which is indicated schematically with U in the plan view of the machine.

The operating units or heads 13 are disposed in a machining zone, along which the moving table 7 transits when the workpieces P to be machined are mounted on it. The table 7, in fact, moves between a loading and unloading zone, indicated with 15, and a machining zone, in which the operating units 13 are located.

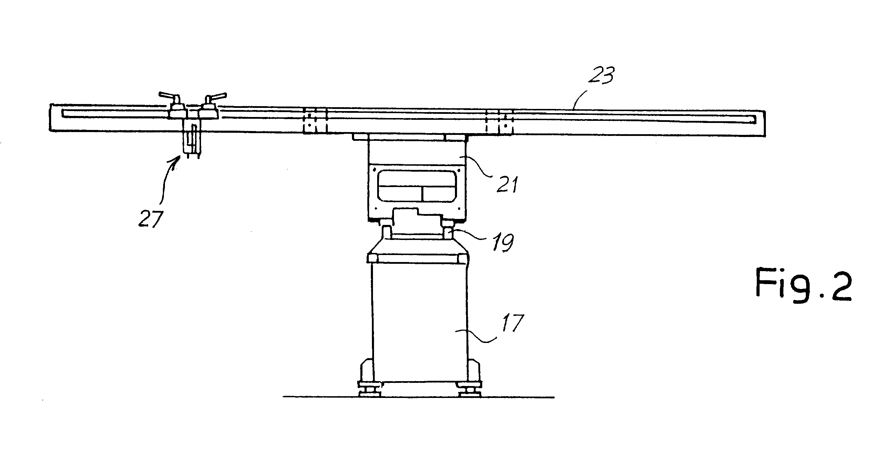

In the machining zone 15, orthogonally to the base 3 and therefore to the direction f7 of movement of the table 7, a further base 17 extends, equipped with guides 19, along which a carriage or slide 21 translates. The slide 21 carries a crosspiece 23, parallel to the direction f7. Beams 25, each of which carries a respective gripper 27, are mounted on the crosspiece 23. Each gripper has two gripping elements 27A, 27B carried by a support 28 adjustable in height on the respective beam 25. The element 27A is adjustable in relation to the support 28 as a function of the height of the pile or stack of workpieces P1 to be engaged by the gripper. Once adjusted this element remains in a fixed position in respect of the support 28. On the contrary, the element 27B is controlled by a pneumatic piston-cylinder actuator 29, which controls opening and closing of the respective gripper, for the purposes to be explained hereunder. Fig.2 shows indicatively only two grippers, but it must be understood that the grippers 27 may vary in number and position according to type, number and form of the workpieces to be handled.

In the example shown the components of the machine tool 1 described hereinbefore are enclosed in a protective cabin indicated as a whole with 31, which substantially surrounds the entire machine and prevents access when the machine is moving. However, it should be understood that this cabin may not be provided or may not be complete.

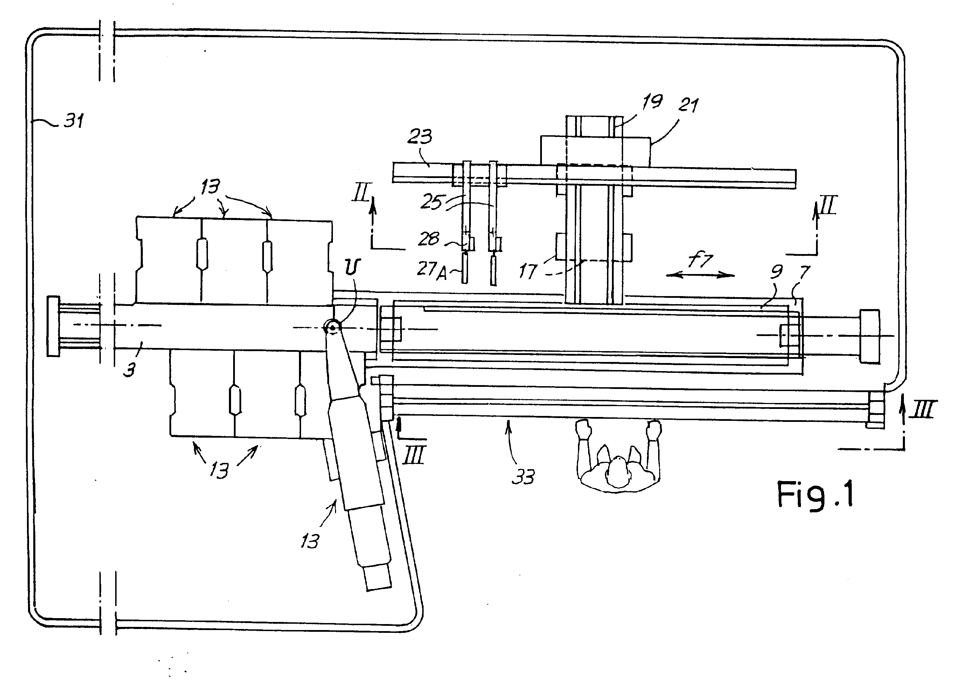

In the loading and unloading zone 15, in which the moving table 7 is located in the position in Fig.1, the protective cabin 31 is equipped with a vertically moving door 33 that closes an entrance to the inside of the cabin 31. The movement to raise and lower the door 33 is controlled by a pair of hydraulic or pneumatic piston-cylinder actuators 35. When the protective cabin is not provided, the door still separates the machine zone from the position of the operator, in any case constituting an element of safety and protection from accidents.

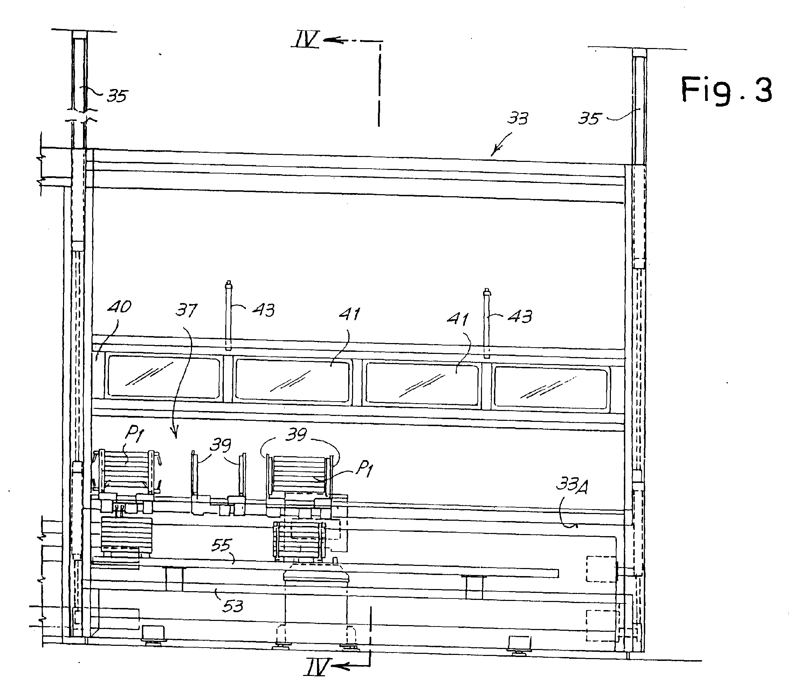

The door 33 houses a compartment 37 disposed inside which is a magazine for workpieces P1 to be machined, which must be picked up by the grippers 27 and carried to the clamping surface of the table 7. In the example shown (see Fig.3) several pairs of vertical guides 39, defining positioning elements for various piles of workpieces P1 to be machined, which may also differ from one another in form and dimension, are disposed in the compartment 37. The number of grippers 27 and their position along the crosspiece 23 correspond to the number of piles of workpieces P1 in the magazine constituted by the totality of the guides 39, so that with each movement of the slide 21 a block of workpieces P1 can be picked up from each pile. In the representation in Fig.3 only three guide units are shown, although it must be understood that their number and position may vary as a function of the type, number and dimension of the workpieces to be machined. Moreover, in Fig.3 one of the three guide units is shown indicatively without workpieces, but it will be understood that in general all the guides mounted will be used to hold piles or stacks of workpieces P1 to be machined.

In the example illustrated the height of the compartment 37 is greater than the height of the vertical guides 39 defining the housings for the workpieces P1 to be machined, so that the operator can easily insert workpieces P1 into the magazine from above. In the example illustrated the magazine contains, in the various sections defined by the guides 39, a quantity of workpieces equivalent to those to be machined in the subsequent cycle. In other terms, while the machine is machining one group of workpieces picked up by the grippers 27, the operator inserts the series of workpieces P1 to be machined during the subsequent cycle into the magazine.

Nonetheless, this configuration may be further improved by increasing the vertical dimension of the magazine and equipping it with a separator system, that is a system that allows separation of single groups of workpieces to be picked up by the grippers 27, separating them from the workpieces overhead to be picked up for the subsequent cycle. Separator devices of this type are known in the art and not described herein. The pieces may also be fed from underneath upwards to the pick-up zone of the grippers, although this is more complex and less advantageous.

Above the compartment 27 housing the magazine the door 33 has a panel 40 with a series of windows 41 more or less at the operator's eye level, which allow easy observation of the inside of the cabin 31. Disposed above the windows 41 are two piston-cylinder actuators 43 that control lifting and lowering of an L-shaped section bar indicated with 45. A panel 47, extending downwards, made of a relatively flexible material, is applied to the section bar 45. The section bar 45 is raised and lowered through the piston cylinder actuators 43 to allow the panel 47 to be positioned facing the compartment 37, between it and the inside of the cabin, or alternatively, above the compartment. The panel forms, therefore, a closure or protection of the compartment 37 with respect to the inside of the cabin 31. Lifting of the panel 47 allows access to the magazine by the grippers 27 when the workpieces P1 are to be picked up. The panel is lowered to close the compartment facing the inside of the cabin during machining to prevent accidental discharge of chips, swarf or the like.

Also associated with the compartment 37 are optical sight means defining an optical safety barrier (not shown), constituted for example by one or more light emitters and one or more receivers. These optical sight means may be positioned along the zone of the compartment 37 opposite the panel 47 and are used to detect the presence of the operator's hands inside the compartment, for example during loading of the workpieces P1 in the magazine. In this way the control unit of the machine will only enable machining when the optical sight means detect that the compartment 37 is free, further reducing the risk of accidents, already averted by the fact that in any case the closed door prevents access to the zone housing the machining tools.

Alternatively, the optical sight means may provide a signal that is used in combination with a signal relative to the position of the panel 47. The control unit of the machine may start machining when the panel 47 is closed even if the operator's hands are inside the compartment 37, as in any case the zone of action of the operator is protected. In a different configuration, the panel 47 may be omitted and the optical sight means provided as the only safety element. Although this solution simplifies the system mechanically, it does not isolate the inside of the cabin, thus making discharge of chips or swarf from machining possible.

Under the compartment 37 on the cabin 31 structure, at the sides of the entrance closed by the door 33, two piston-cylinder actuators 51 are disposed to control the lifting and lowering movement of a crosspiece 53, secured to which is an elevator 55 moving according to the double arrow f55, which receives the machined workpieces P2 from the table 7 and transfers them with downward travel under the door 33 or at the level of a passage provided in the lower zone of the door. The elevator 55 with crosspiece 53 and actuators 51 thus constitutes a pick-up member to remove machined workpieces from the machine.

In the example shown the door 33 extends downwards to a lower section bar 33A, under which a passage remains at the level of the lower height reached by the elevator 55. Through this passage the machined workpieces P2 picked up by the elevator 55 may be removed by the operator, or unloaded onto a conveyor, not shown. In a further development of the invention, not shown, a door or another type of closure may be provided to reduce or close the passage when the machine is operating, to prevent discharge of chips or swarf.

With the layout illustrated above the machine can operate in manual loading or unloading mode, for example to machine small batches of workpieces. In this case the operator lifts the door 33 and places the workpieces directly on the clamping surface of the moving table 7. Subsequently he closes the door 33 and enables machining. This may be provided automatically by sensors or microswitches that detect the position of the door. At the end of the machining cycle, the operator opens the door and removes the machined workpieces manually, after having released the clamping systems of the workpieces.

Alternatively, when a large number of identical workpieces are to be machined, the operator adjusts and blocks the grippers 27 in the appropriate position along the crosspiece 23 and adjusts the guides 39 to insert the workpieces P1 to be machined. As shown in the example in Fig.3, several pairs of guides 39 for several piles of different or identical workpieces that can be machined simultaneously may be disposed in the magazine, housed in the compartment 37 of the door 33. Alternatively, (especially when machining very long workpieces) the magazine may house a single group of workpieces.

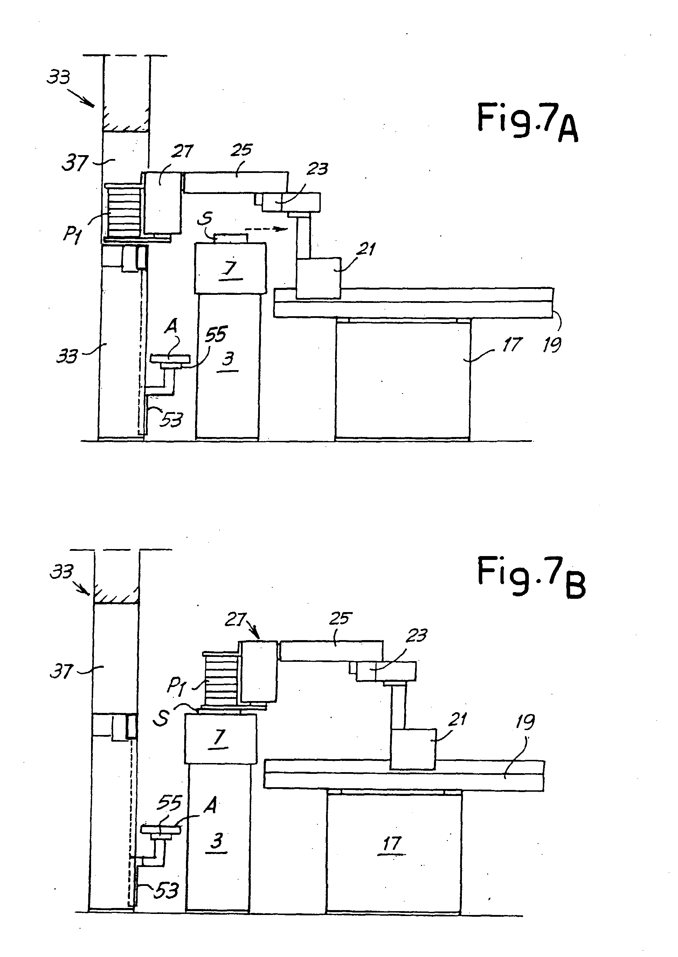

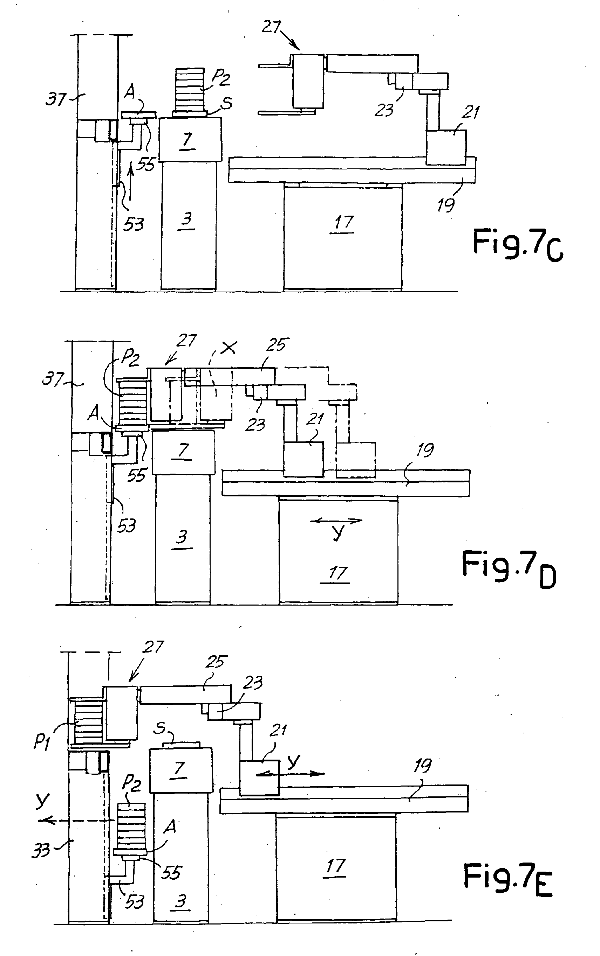

After this operation to set the machine, the door 33 may remain closed and the machine operates according to the cycle shown schematically in Figs.7A-7E.

The operator loads the workpieces P1 to be machined into the magazine composed of the guides 39. With the table 7 in position in the loading and unloading zone 15, the slide 21 advances towards the door and the grippers 27 pick up the workpieces P1. In this phase the panel 47 is raised to grant access to the grippers. The fact that the distance between the elements 27A and 27B of each gripper and their position in respect of the beam 25 can be adjusted allows optimal adaptation of the various grippers to the form and dimension of the workpieces, and to the total number of workpieces P1 to be picked up at each cycle.

Once the workpieces have been engaged through the grippers 27, they are moved back with reverse travel of the slide 21 to carry the workpieces above the clamping surface of the moving table 7. Here the workpieces are released by the grippers which move back out of the range of action of the clamping members carried by the table 7, which clamp the workpieces in the machining position. In practice the workpieces may be clamped while the grippers are still at the level of the moving table and the grippers then removed from the workpieces already clamped in their correct position.

The panel 47 forming the closing member of the compartment 37 containing the magazine for workpieces is translated downwards to close the compartment and allow machining to start.

Machining is performed with a translatory movement of the table 7 towards the operating heads 13, while if necessary the operator can load a new batch of workpieces P1 to be machined in the subsequent cycle.

Upon termination of machining the pack of workpieces clamped on the moving table 7, this returns towards the loading and unloading zone 15 and the clamping members 9, 11 are opened. At this point the grippers 27 are once again translated towards the door 33 to push the machined workpieces P2 from the surface of the table 7 to the elevator 55, which for this purpose has been lifted to the upper height, aligned with the height of the surface of the table 7. When the machined workpieces P2 have been transferred to the elevator 55, it is lowered and the grippers 27 can continue to move towards the compartment 37 of the door 33 to pick up the subsequent pack of workpieces to be machined and start the subsequent machining cycle.

The machined workpieces P2 can be picked up by the operator (or by a mechanical system, not shown) through the passage left free, or specifically opened by a closing member, under the crosspiece 33A of the door 33.

To facilitate movement of the jaws of the grippers, without interference with the surface of the moving table 7 and with the surface of the elevator 55 various systems may be used. With regard to the table 7, it is normally provided with a support or a support-template below the piles of workpieces to be machined. These supports or templates are provided to prevent the tools and the table 7 from colliding during machining. When the machine is a so-called copying machine, the support-template is also used to control movement of the tools in a direction orthogonal to the direction of movement of the table. To allow passage of the lower jaws 27B of the grippers 27, the support or support-template may be suitably grooved at the level of the position of the grippers 27. The support is indicated with S in the drawing.

An analogous configuration may be provided on the elevator 55. Alternatively, this may be equipped with adjustable supports A.

It is clear from the description above that the machine according to the invention allows a high level of safety to be attained, as the zone in which the work tools are positioned is entirely enclosed in the cabin and not accessible. Moreover, the grippers 27 and the members for moving them are also inside the cabin 31 and not a source of danger for the operator. The operator may perform operations to load the workpieces P1 into the magazine and pick up machined workpieces P2 from the same side of the machine, without having to move around it. Finally, the mechanism of the door with the magazine associated with it allows the operator to work in manual mode, when this is required, for example for small series of workpieces, without having to make adjustments to the machine and without the space occupied by feed systems in front of the door.

It is understood that the drawing shows only a practical embodiment of the invention, which may vary in its forms and arrangements without however departing from the scope of the concept on which the invention is based. Any reference numbers in the accompanying claims do not limit the scope of protection whatsoever and are provided for the sole purpose of facilitating reading in the light of the preceding description and the accompanying drawings.

## Claims

1. A machine tool comprising:
- a base (3) on which a table (7) moves to support workpieces (P1) to be machined, said table moving from a workpiece (P1) loading and unloading position (15) to a machining zone, provided with at least one operating head (13) with at least one tool (U);
- a moving door (33) disposed at the side of the base (1), for opening and closing an entrance to the loading and unloading zone (15);
- workpiece loading and unloading devices;
- and a magazine for the workpieces (P1) to be machined;
**characterized in that** said magazine (39) is associated with said door (33), and **in that** said loading and unloading devices comprise at least one moving gripper (27), controlled to pick up the workpieces from said magazine and place them on said table (7), said gripper being disposed on the opposite side of the door in respect of the base (3) when it is not operating.

2. Machine as claimed in claim 1, **characterized in that** said door is integrated in a protective cabin (31) enclosing the machine, with said at least one gripper disposed inside the cabin.

3. Machine as claimed in claim 1 or 2, **characterized in that** said magazine is disposed in the space occupied by the door.

4. Machine as claimed in claim 1, 2 or 3, **characterized in that** said magazine moves with the door.

5. Machine as claimed in one or more of the previous claims, **characterized in that** said at least one gripper is carried by a slide (21) positioned on the opposite side of said base (3) in respect of said door (33).

6. Machine as claimed in claim 5, **characterized in that** said slide moves orthogonally to the direction of movement (f7) of said table (7) on said base (3).

7. Machine as claimed in one or more of the previous claims, **characterized in that** said loading and unloading devices comprise a pick-up member (53, 55) for said machined workpieces (P2), positioned between said base (1) and said door (33).

8. Machine as claimed in claim 7, **characterized in that** said pick-up member (53, 55) is positioned at a height equal to or below the height of the surface of the moving table to which the workpieces being machined are clamped.

9. Machine as claimed in claim 7 or 8, **characterized in that** said pick-up member (53, 55) moves vertically between a position to receive the machined workpieces from said moving table and a position to remove the machined workpieces.

10. Machine as claimed in one or more of the previous claims, **characterized in that** said door moves vertically.

11. Machine as claimed in one or more of the previous claims, **characterized in that** said door has a compartment (37) disposed inside which is a magazine (39) for the workpieces to be machined (P2), said compartment being accessible from the outside and from the inside of the cabin.

12. Machine as claimed in claim 11, **characterized in that** associated with said compartment (37) is a member (43, 45, 47) to close the compartment towards the inside of said cabin (31).

13. Machine as claimed in claim 12, **characterized in that** said closing member comprises a vertically moving panel (47).

14. Machine as claimed in claim 13, **characterized in that** said panel is flexible.

15. Machine as claimed in one or more of the claims from 8 to 11, **characterized in that** a safety optical barrier is associated with said compartment.

16. Machine as claimed in one or more of the previous claims, **characterized in that** underneath said magazine (39) the door has a passage to pick up the machined workpieces (P2).

17. Machine as claimed in claims 9 and 16, **characterized in that** said passage for machined workpieces is in the lower position to which said pick up member (53, 55) is carried.

18. Machine as claimed in one or more of the claims from 5 to 17, **characterized in that** said slide (21) carries a crosspiece (23) that extends more or less parallel to the direction of movement (f7) of the moving table (7), to which a plurality of grippers (27) are fixed.

19. Machine as claimed in claim 18, **characterized in that** said grippers (27) are adjustable along said crosspiece (23).

20. Machine as claimed in claim 18 or 19, **characterized in that** the grippers are secured to said crosspiece by beams (25) orthogonal to the crosspiece (23).

21. Machine as claimed in one or more of the previous claims, **characterized in that** said at least one gripper (27) is adjustable in height in respect of said moving table (7).

22. Machine as claimed in one or more of the previous claims, **characterized in that** said magazine (39) is a multiple magazine, to house several piles of products to be machined.
